# EUROPEAN PATENT SPECIFICATION

(11) **EP 1 094 568 B1**
(45) Date of publication and mention of the grant of the patent: **01.08.2007**
(21) Application number: 00308718.6
(22) Date of filing: 04.10.2000
(51) Int. Cl.: H01R 13/73, F15B 13/00

(54) **Power-supply unit for solenoid valve assembly**
Stromspeisevorrichtung einer Magnetventilanordnung
Dispositif d'alimentation en courant pour un agencement de distributeur à solénoide

(30) Priority: 18.10.1999 JP 29597599
(43) Date of publication of application: 25.04.2001
(73) Proprietor: SMC CORPORATION, Minato-ku, Tokyo (JP)
(72) Inventor: Miyazoe, Shinji c/o SMC Corporation, Tsukuba-gun, Ibaraki (JP); Ishikawa, Makoto c/o SMC Corporation, Tsukuba-gun, Ibaraki (JP)
(74) Representative: Findlay, Alice Rosemary

(56) References cited:
- JP-A- 9 133 240
- JP-A- 10 132 128
- US-A- 4 671 600
- US-A- 4 850 882
- US-A- 4 997 381
- US-A- 5 795 187

## Description

The present invention relates to a power-supply unit for supplying power to a solenoid valve assembly comprising a plurality of solenoid valves arranged in a row.

In known solenoid valve assemblies comprising a plurality of solenoid valves arranged in a row, power is generally supplied to each solenoid valve simultaneously via a multielectrode connector. However, when the orientation of the multielectrode connector is limited to either an upright orientation or a horizontal orientation, connection is sometimes difficult depending on the position or the direction in which the solenoid valve assembly is installed.

As a measure to solve this problem, Japanese Unexamined Patent Application Publication No. 9-133240 discloses a connector that can be attached to a solenoid valve assembly selectively in the upright or the horizontal position. However, it would be desirable to provide a solenoid valve assembly in which the direction of the multielectrode connector with respect to the solenoid valve assembly can be changed more easily.

Japanese Application 10-132128 discloses a solenoid valve manifold in which the direction of a concentrated wiring part can be changed by turning a housing in which the concentrated wiring part is provided. A connector block is provided on a solenoid valve manifold main body, and a connector housing is provided with a D-sub connector to which wiring cords from respective solenoid valves are connected is arranged on the connector block. A housing part is provided on the connector block, and the connector housing is rotatably housed in the housing part.

Japanese Patent Application No. 9-133240 discloses a power-supply unit for a solenoid valve assembly comprising a base to be mounted on one end of the solenoid valve assembly, a connector frame fitted on said base, and a multielectrode connector mounted on the connector and electrically connected to the solenoid valves for supplying power, wherein the connector frame is rotatably supported on the base so that the position of the socket connection of the multielectrode connector can be switched between an upright position and a horizontal position, and wherein an engaging locking means for releasably locking the connector frame in either one of said two positions by engagement is provided between said connector frame and the base, wherein the locking means comprises a pivot of circular cross section for rotatably supporting the connector frame on the base.

The present invention provides a power-supply unit according to claim 1.

The locking member can be made movable between the locked position and the released position by providing the square pivot member on the connector frame at a position adjacent to and coaxial with the pivot of circular cross section, providing the locking member with a flat portion for restraining the rotation of the pivot when abutted against the flat face portion of the square pivot member, and making the locking member slidable along the axis of rotation.

In a specific embodiment of the power-supply unit for a solenoid valve assembly, the base is provided with a bearing portion that rotatably supports the lower half of the pivot and a flat supporting portion for supporting the square pivot member, and the locking member is provided with a pivot holder movable between the pivot and a square pivot member by sliding in the direction of the axis of the pivot, so that the connector frame is locked in the locked position where the square pivot member is interposed between the flat portion of the pivot holder and the flat supporting portion and is rotatable at the position where the square pivot member is released.

With the power-supply unit for a solenoid valve assembly having the above described structure, the position of the connector frame can be locked by sliding the locking member provided on the base and interposing the square pivot member between the flat portion of the pivot holder and the flat supporting portion of the base, and the connector frame can be rotated by moving the pivot holder onto the pivot on the connector frame to release the square pivot member.

Therefore, the position of the connector frame can be changed simply by sliding the locking member provided on the base.

The invention will now be described by way of the accompanying drawings in which:
Fig. 1 is an exploded perspective view showing an embodiment of a power-supply unit for a solenoid valve assembly according to the present invention.
Fig. 2 is a perspective view showing the assembled state of the embodiment shown in Fig. 1.
Fig. 3 is a perspective view showing the state where the power-supply unit of the embodiment shown in Fig. 1 is attached to the solenoid valve assembly**.**
Fig. 4 is a perspective view, partly broken, of the embodiment shown in Fig. 1 showing the state where the multielectrode connector is locked in the upright position.
Fig. 5 is a perspective view, partly broken, showing the state where the multielectrode connector is free to rotate.
Fig. 6 is a perspective view, partly broken, showing the state where the multielectrode connector is locked in the horizontal position.

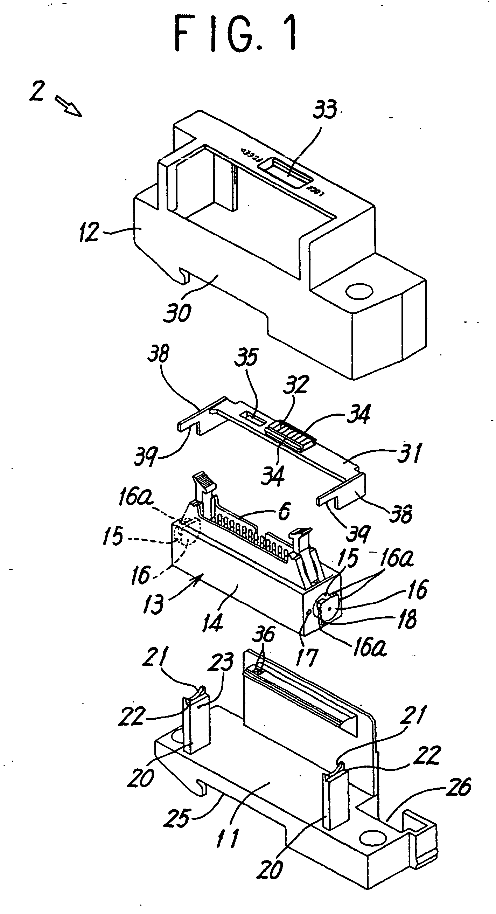

Fig. 1 to Fig. 6 show an embodiment of a power-supply unit for a solenoid valve assembly according to the present invention.

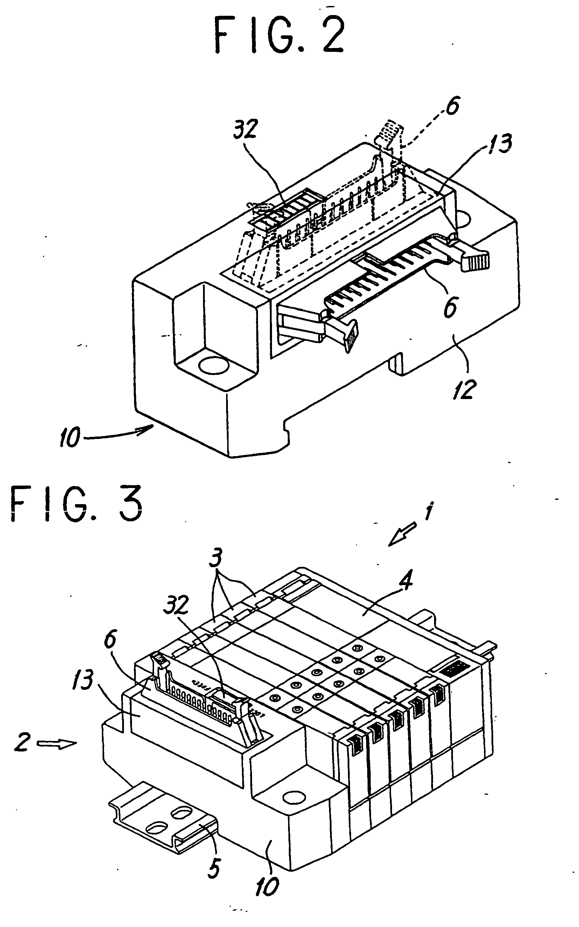

As shown in Fig. 3, a solenoid valve assembly 1 including a power-supply unit 2 comprises a plurality of solenoid valves 3 connected with respect to each other, the power-supply unit 2 described above mounted on one side thereof, and an air charging and exhausting block 4 mounted on the other side thereof, all of which are connected with respect to each other by being fixed together on the mounting rail 5. The multielectrode connector 6 of the power-supply unit 2 for supplying power is electrically connected to the power-receiving terminal of each solenoid valve by a lead via the internal connector (not shown).

As shown in Fig. 1 and Fig. 2 in detail, the power-supply unit 2 comprises a base 10 composed of a bed portion 11 and a cover portion 12, and mounted on one end of the solenoid valve assembly, a connector frame 13 to be rotatably mounted on the base 10, and the above described multielectrode connector 6 fixedly mounted on the connector frame 13 for supplying power.

The connector frame 13 comprises pivots 15 of circular cross section on both sides of the main body 14, and square pivot members 16 mounted respectively at one axial end of respective pivots for providing flat surfaces thereat, respectively, so that orientation of the socket receiving portion of the multielectrode connector 6 supported on the base 10 can be selectively changed between an upward orientation and a horizontal orientation (positions shown by solid lines and by phantomlines). The square pivot members 16 are located outside the pivot 15 on one end of the connector frame 13, and inside the pivot 15 on the other end of the connector frame 13, and the axial length of these pivots 15 and square pivot members 16 on both sides are identical. The square pivot member 16 is square at the upper half and circular at the lower half corresponding to the pivot 15 in the state where the multielectrode connector 6 is in an upright position, and the square portion thereof defines the flat face portion 16a of the square pivot member 16. Around the pivots 15 and the square pivot members 16 on both end surfaces of the main body 14 of the connector frame 13, there are provided small positioning holes 17 and 18 as shown in Fig. 1.

The base 10 is composed of a bed portion 11 and the cover portion 12 connected by means of projections and recesses (not shown) into a single unit.

Near both ends of the bed portion 11 that constitutes the base, there is provided a pair of bearing posts 20 standing upward, as is clearly shown in Fig. 1, and the tip of each bearing post is formed with a bearing portion 21 of semi-circular shape for rotatably supporting the lower half portion of the circular pivot 15 on the connector frame 13, and adjacent to the bearing portion 21, there is formed a flat supporting portion 22 for supporting the square pivot member 16 attached to the pivot 15. In this way, the bearing portion and the flat supporting portion are formed corresponding to the pivot 15 and the square pivot member 16 respectively. The pair of bearing posts 20 are spaced so that the inner opposing surfaces thereof come into contact with both end surfaces of the connector frame respectively, and each of the respective inner opposing surfaces of the bearing posts 20 is provided with a small projection 23 that resiliently engages one of the small holes 17 and 18 formed on the connector frame 13 to acknowledge being at one of the two positions where the portion to receive the socket faces an upright orientation and where the same faces a horizontal orientation, as shown in Fig. 2, when the direction of the connector frame 13 is changed between these two positions.

The bed portion 11 is formed with a rail groove 25 to be fixed on the mounting rail 5, and an opening 26 through which a lead for connecting the multielectrode connector 6. to each solenoid valve 3 on the side which comes into contact with the solenoid valve 3.

The cover portion 12 to cover the bed portion 11 of the base is provided with an opening 30 of a size through which the multielectrode connector 6 can be exposed in the above described two directions by rotating the connector frame 13, and a releasably engaging locking means for locking the connector frame 13 into any one of the two positions in cooperation with the square pivot member 16 on the connector frame 13 and the flat supporting portion 22 of the bearing post 20.

The locking member 31 constituting a part of the locking means is supported by the cover portion 12 so as to be able to slide in the direction of the axis of the pivot 15 on the connector frame 13, and a pair of locking ridges 34 and 34 for resiliently engaging with the edges of the opening 33 for receiving the locking member are provided on both sides of the final control element 32 on the upper surface thereof. The locking member 31 is slidably maintained in contact with the connector frame 13, and a cantilever resilient strip 35 provided on the reverse side thereof has a small projection (not shown) projecting on the reverse side. The locking member 31 may be held in two positions, that is, the locked position where the rotation of the connector frame 13 is locked and the released position where the connector frame 13 can rotate, by sliding it to the positions where the small projection is engaged with any one of two engaging holes 36 formed on the back cover of the bed portion 11.

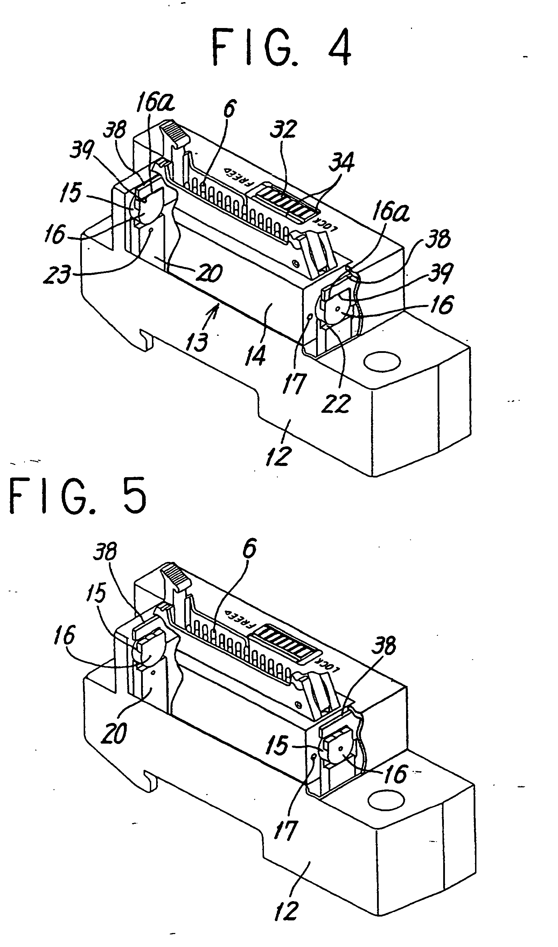

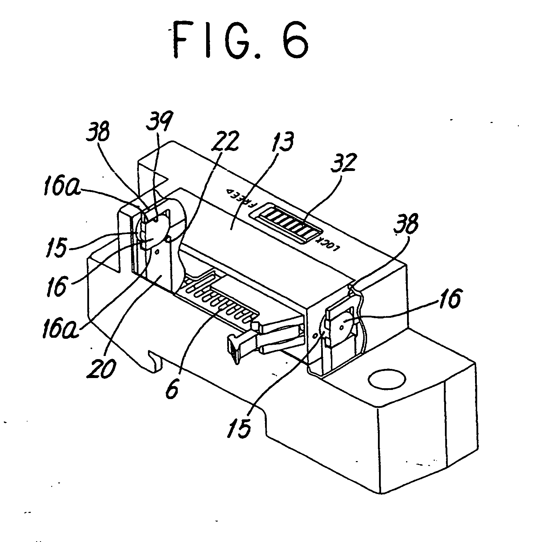

At both ends of the locking member 31, there are provided pivot holders 38 that are movable between the top of the pivots 15 and the top of the square pivot members 16 provided on both ends of the connector frame 13. The pivot holder 38 includes a flat portion 39 for restraining the rotation of the connector frame 13 by abutting against the flat face portion 16a of the square pivot member 16. When the flat portion 39 is in contact with the flat face portion 16a of the square pivot member 16 as shown in Fig. 4 as a result of sliding movement of the locking member 31, the rotation of the connector frame 13 is locked. As shown in Fig. 6, when the flat face portion 16a of the square pivot member 16 is interposed between the pivot holder 38 and the flat supporting portion 22 of the bearing post 20, the rotation of the connector frame 13 is also locked.

Fig. 4 shows a state in which the connector frame 13 is locked in an upright position with the flat portion of the pivot holder 38 abutted against the square pivot member 16, and Fig. 6 shows a state in which the connector frame 13 is locked in a horizontal position with the flat portion of the pivot holder 38 abutted against another flat face portion 16a of the square pivot member 16, and Fig. 5 shows a state in which the connector holder 13 is free to rotate when the pivot holder 38 moves on top of the pivot 15, which is a released position.

In this way, by moving the pivot holder 38 of the locking member 31 between the top of the pivot 15 and the top of the square pivot member 16, the locking member is selectively switched between the locked position where the locking member abuts against the square pivot member 16 and the rotatable position where the locked state is released.

In the power-supply unit 2 for a solenoid valve assembly in this arrangement, the position of the connector 13 can be locked by sliding the locking member 31 provided on the base 10 and interposing the square pivot member 16 between the flat portion 39 of the pivot holder 38 and the flat supporting portion 22 of the base 10. Conversely, the locked state is released so that the connector frame 13 can be rotated freely by moving the pivot holder 38 onto the pivot 15 on the connector frame 13.

Therefore, by simply sliding the locking member 31 provided on the base 10, the orientation of the connector frame can be easily changed.

As described thus far, a power-supply unit for a solenoid valve assembly wherein the orientation of the multielectrode connector is easily changed in a simple manner is provided. More specifically, a power-supply unit is provided wherein the orientation of the connector frame can be changed simply by sliding the locking member provided on the base.

## Claims

1. A power-supply unit (2) for a solenoid valve assembly (1), having a plurality of solenoid valves (3) arranged in a row, the unit comprising a base (10) to be mounted on one end of the solenoid valve assembly (1), a connector frame (13) fitted on the base (10), and a multielectrode connector (6) mounted on the connector frame (13) and electrically connectable to the solenoid valves (3) for supplying power, wherein the connector frame (13) is rotatably supported on the base (10) so that the socket connection of the multielectrode connector (6) can be switched between an upright position and a horizontal position, and wherein locking means (15, 16, 31) for releasably locking the connector frame (13) in either one of said two positions is provided between the connector frame (13) and the base (10), wherein the locking means comprises a pivot (15) of circular cross section for rotatably supporting the connector frame,(13) on the base(10), **characterised in that** the locking means comprises a pivot member (16) attached to the pivot (15), a part of which is formed in a square shape, and a (15, 16, 31) locking member (31) provided on the base (10) and movable between a locked position where the locking member (31) abuts against a flat face portion (16a) of the pivot member (16) and a released position.

2. A power-supply unit as claimed in claim 1 wherein the pivot member (16) is provided on the connector frame (13) at a position adjacent to and coaxial with the circular cross section pivot (15), and the locking member (31) is mounted on the base (10) and provided with a flat portion (39) for restraining the rotation of the pivot (15) when abutted against the flat face portion (16a) of the square pivot member (16), and wherein the locking member (31) is slidable along the axis of rotation.

3. A power-supply unit as claimed in claim 2 wherein the base (10) has a bearing portion (21) that rotatably supports the pivot (15) and a flat supporting portion (22) for supporting the pivot member (16), and the locking member (31) is provided with a pivot holder (38) movable between the pivot (15) and the pivot member (16) by sliding movement in the direction of the axis of the pivot**,** so that the connector frame (13) is locked in the locked position when the flat portion (39) of the pivot member is interposed between the pivot holder (38) and the flat supporting portion (22).

## Patentansprüche

1. Stromspeisevorrichtung **(2)** einer Magnetventilanordnung **(1),** die mehrere in einer Reihe angeordnete Magnetventile **(3)** aufweist, die Vorrichtung umfassend eine Basis **(10),** die auf ein Ende der Magnetventilanordnung **(1)** aufgesetzt wird, einen Verbindungskontaktrahmen **(13),** aufgesetzt auf die Basis **(10),** und einen Mehrfach-Elektroden-Verbinder **(6),** aufgesetzt auf den Verbindungskontaktrahmen **(13)** und elektrisch verbindbar mit den Magnetventilen **(3)** zur Stromeinspeisung, wobei der Verbindungskontaktrahmen **(13)** drehbar auf der Basis **(10)** gelagert ist, so dass die Sockelverbindung des Mehrfach-Elektroden-Verbinders **(6)** zwischen einer senkrechten Position und einer horizontalen Position gewählt werden kann, und wobei das Arretierungsmittel **(15, 16, 31)** zur lösbaren Arretierung des Verbindungskontaktrahmens **(13)** in einer dieser Positionen zwischen dem Verbindungskontaktrahmen **(13)** und der Basis **(10)** vorhanden ist, wobei das Arretierungsmittel einen Zapfen **(15)** mit kreisrundem Querschnitt umfasst, der den Verbindungskontaktrahmen **(13)** drehbar auf der Basis **(10)** lagert, **dadurch gekennzeichnet, dass** das Arretierungsmittel **(15, 16, 31** ) ein Zapfenelement **(16),** das am Zapfen **(15)** angebracht ist, dessen einer Teil rechteckig geformt ist, und ein Arretierungselement **(31)** umfasst, das an der Basis **(10)** vorhanden ist und beweglich ist zwischen einer arretierten Position, in der das Arretierungselement **(31)** an einer flachen Oberfläche des Abschnittes **(16a)** des Zapfenelementes **(16)** anliegt, und einer gelösten Position.

2. Stromspeisevorrichtung nach Anspruch 1, wobei das Zapfenelement **(16)** am Verbindungskontaktrahmen **(13)** in einer Position angrenzend an den und koaxial zu dem kreisrunden Querschnitt des Zapfens **(15)** und das Arretierungselement **(31)** an der Basis **(10)** vorhanden ist und einen flachen Abschnitt **(39)** zur Verhinderung der Drehung des Zapfens **(15)** aufweist, wenn er an dem flachen Oberflächenabschnitt **(16a)** des rechteckigen Zapfenelementes **(16)** anliegt, und wobei das Arretierungselement **(31)** entlang der Rotationsachse verschiebbar ist.

3. Stromspeisevorrichtung nach Anspruch 2, wobei die Basis **(10)** einen tragenden Abschnitt **(21)** aufweist, auf dem der Zapfen **(15)** drehbar gelagert ist, und einen flachen tragenden Abschnitt **(22)** zum Tragen des Zapfenelementes **(16),** und das Arretierungselement **(31)** weist einen Zapfenhalter **(38)** auf, der zwischen dem Zapfen **(15)** und dem Zapfenelement **(16)** gleitend in der Richtung der Achse des Zapfens beweglich ist, so dass der Verbindungskontaktrahmen **(13)** in der arretierten Position arretiert ist, wenn der flache Abschnitt **(39)** des Zapfenelementes zwischen den Zapfenhalter **(38)** und den flachen tragenden Abschnitt **(22)** geschoben wird.

## Revendications

1. Dispositif d'alimentation en courant (2) pour un agencement de distributeurs à solénoïde (1), ayant une pluralité de distributeurs à solénoïde (3) arrangés en une rangée, le dispositif comportant une base (10) devant être montée sur une extrémité de l'agencement de distributeurs à solénoïde (1), un cadre connecteur (13) installé sur la base (10), et un connecteur à plusieurs électrodes (6) monté sur le cadre connecteur (13) et connectable de manière électrique sur les distributeurs à solénoïde (3) à des fins d'alimentation en courant, dans lequel le cadre connecteur (13) est supporté de manière rotative sur la base (10) de telle manière que la connexion par prise du connecteur à plusieurs électrodes (6) peut être commutée entre une position verticale et une position horizontale, et dans lequel un moyen de verrouillage (15, 16, 31) destiné à verrouiller le cadre connecteur (13) de manière libérable dans l'une ou l'autre desdites deux positions est mis en oeuvre entre le cadre connecteur (13) et la base (10), dans lequel le moyen de verrouillage comporte un pivot (15) de section transversale circulaire pour supporter de manière rotative le cadre connecteur (13) sur la base (10), **caractérisé en ce que** le moyen de verrouillage (15, 16, 31) comporte un organe de pivot (16) attaché sur le pivot (15), dont une partie est réalisée en une forme carrée, et un organe de verrouillage (31) mis en oeuvre sur la base (10) et déplaçable entre une position verrouillée où l'organe de verrouillage (31) vient buter contre une portion de face plate (16a) de l'organe de pivot (16) et une position déverrouillée.

2. Dispositif d'alimentation en courant selon la revendication 1, dans lequel l'organe de pivot (16) est mis en oeuvre sur le cadre connecteur (13) sur une position adjacente et coaxiale par rapport au pivot à section transversale circulaire (15), et l'organe de verrouillage (31) est monté sur la base (10) et mis en oeuvre avec une portion plate (39) afin de restreindre la rotation du pivot (15) quand il vient buter contre la portion de face plate (16a) de l'organe de pivot carré (16), et dans lequel l'organe de verrouillage (31) est coulissable le long de l'axe de rotation.

3. Dispositif d'alimentation en courant selon la revendication 2, dans lequel la base (10) a une portion d'appui (21) qui supporte le pivot (15) de manière rotative et une portion de support plate (22) destinée à supporter l'organe de pivot (16), et l'organe de verrouillage (31) est mis en oeuvre avec un porte-pivot (38) déplaçable entre le pivot (15) et l'organe de pivot (16) par un mouvement coulissant dans la direction de l'axe du pivot, de telle manière que le cadre connecteur (13) est verrouillé dans la position verrouillée quand la portion plate (39) de l'organe de pivot est intercalée entre le porte-pivot (38) et la portion de support plate (22).
